# EUROPEAN PATENT APPLICATION

(11) **EP 4 787 946 A1**
(43) Date of publication of application: **05.08.2026**
(21) Application number: 26150952.5
(22) Date of filing: 09.01.2026
(51) Int. Cl.: H04W 24/10, H04W 36/00

(54) **SERVING CELL MEASUREMENT CONFIGURATION**

(30) Priority: 03.02.2025 WO PCT/CN2025/075639
(71) Applicant: Nokia Technologies Oy, 02610 Espoo (FI)
(72) Inventor: DU, Lei, Beijing (CN); LAKSHMINARAYANAPURAM KRISHNAKUMAR, Kamakshi, Espoo (FI); KOSKELA, Jarkko Tuomo, Oulu (FI)
(74) Representative: Nokia EPO representatives

(57) **Abstract**

Example embodiments of the present disclosure are directed to a solution for serving cell measurement configuration. In the solution, a first apparatus receives, from a second apparatus, a configuration of at least one measurement object for a plurality of on-demand synchronization signals for a cell. In accordance with a determination that an on-demand synchronization signal is activated for the cell, the first apparatus determines a measurement object for the activated synchronization signal from the received configuration for the cell. The first apparatus determines a measurement result for the cell by measuring one or more synchronization signals at least based on the determined measurement object. The first apparatus transmits the measurement result to the second apparatus.

## Description

### FIELD

Various example embodiments of the present disclosure generally relate to the field of telecommunication and in particular, to methods, devices, apparatuses and computer readable storage medium for serving cell measurement configuration.

### BACKGROUND

Serving cell measurement is an essential part of the 5G New Radio (NR) standard used for wireless communication. It refers to the process by which a user equipment (UE) monitors and evaluates the signal quality of its currently connected serving cell and neighboring cells. The mechanism for serving cell measurement is critical for maintaining seamless connectivity, enabling handover decisions, and optimizing network performance.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, a configuration of at least one measurement object for a plurality of on-demand synchronization signals for a cell; in accordance with a determination that an on-demand synchronization signal is activated for the cell, determine a measurement object for the activated synchronization signal from the received configuration for the cell based on the activated synchronization signal; determine a measurement result for the cell by measuring one or more synchronization signals at least based on the determined measurement object; and transmit the measurement result to the second apparatus.

In a second aspect of the present disclosure, there is provided a second apparatus. The second apparatus comprises at least one processor; and at least one memory storing instructions that, when executed by the at least one processor, cause the second apparatus at least to: transmit, to a first apparatus, a configuration of at least one measurement object for a plurality of on-demand synchronization signals for a cell; receive, from a first apparatus, a measurement result for the cell, wherein the measurement result is determined by measuring one or more synchronization signals at least based on a measurement object, and wherein the measurement object is determined for the activated synchronization signal from the received configuration for the cell.

In a third aspect of the present disclosure, there is provided a method. The method comprises: receiving, from a second apparatus, a configuration of at least one measurement object for a plurality of on-demand synchronization signals for a cell; in accordance with a determination that an on-demand synchronization signal is activated for the cell, determining a measurement object for the activated synchronization signal from the received configuration for the cell; determining a measurement result for the cell by measuring one or more synchronization signals at least based on the determined measurement object; and transmitting the measurement result to the second apparatus.

In a fourth aspect of the present disclosure, there is provided a method. The method comprises: transmitting, to a first apparatus, a configuration of at least one measurement object for a plurality of on-demand synchronization signals for a cell; receiving, from a first apparatus, a measurement result for the cell, wherein the measurement result is determined by measuring one or more synchronization signals at least based on a measurement object, and wherein the measurement object is determined for the activated synchronization signal from the received configuration for the cell.

In a fifth aspect of the present disclosure, there is provided a first apparatus. The first apparatus comprises means for receiving, from a second apparatus, a configuration of at least one measurement object for a plurality of on-demand synchronization signals for a cell; means for in accordance with a determination that an on-demand synchronization signal is activated for the cell, determining a measurement object for the activated synchronization signal from the received configuration for the cell; means for determining a measurement result for the cell by measuring one or more synchronization signals at least based on the determined measurement object; and means for transmitting the measurement result to the second apparatus.

In a sixth aspect of the present disclosure, there is provided a second apparatus. The second apparatus comprises means for transmitting, to a first apparatus, a configuration of at least one measurement object for a plurality of on-demand synchronization signals for a cell; means for receiving, from a first apparatus, a measurement result for the cell, wherein the measurement result is determined by measuring one or more synchronization signals at least based on a measurement object, and wherein the measurement object is determined for the activated synchronization signal from the received configuration for the cell .

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2A illustrates a schematic diagram of an example of synchronization signal block (SSB) configuration for a serving cell;
FIG. 2B illustrates a schematic diagram of an example of a measurement configuration (e.g., MeasConfig) framework;
FIG. 3 illustrates an example diagram of cell measurement with two on-demand SSBs in a secondary cell (SCell);
FIG. 4 illustrates a signaling flow for serving cell measurement configuration in accordance with some example embodiments of the present disclosure;
FIG. 5 illustrates an example signaling flow for serving cell measurement configuration in accordance with some example embodiments of the present disclosure;
FIG. 6 illustrates an example signaling flow for serving cell measurement configuration in accordance with some example embodiments of the present disclosure;
FIG. 7 illustrates an example signaling flow for serving cell measurement configuration in accordance with some example embodiments of the present disclosure;
FIG. 8 illustrates a flowchart of a method implemented at a first apparatus in accordance with some example embodiments of the present disclosure;
FIG. 9 illustrates a flowchart of a method implemented at a second apparatus in accordance with some example embodiments of the present disclosure;
FIG. 10 illustrates a simplified block diagram of a device that is suitable for implementing example embodiments of the present disclosure; and
FIG. 11 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example, and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

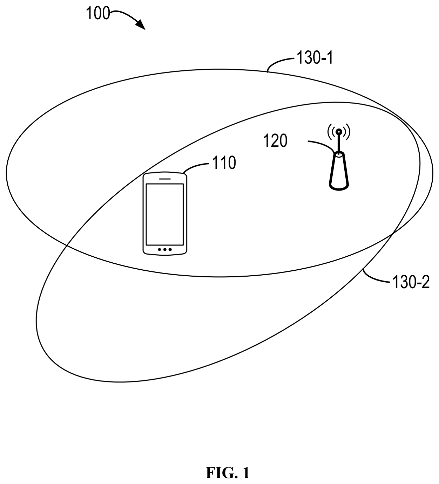

FIG. 1 illustrates an example communication environment 100 in which example embodiments of the present disclosure can be implemented. In the communication environment 100, a plurality of communication devices, including a first apparatus 110 and a second apparatus 120, can communicate with each other. In the example of FIG. 1, the first apparatus 110 may be a terminal device, for example, a UE, and the second apparatus 120 may be a network device, for example, a base station serving the UE. The serving area of the second apparatus 120 may be called a cell. The first apparatus 110 may receive synchronization signal(s), e.g., synchronization signal block(s) (SSB(s)) from the second apparatus 120.

As shown in FIG. 1, the first apparatus 110 may be covered by two cells, i.e., cell 130-1 and cell 130-2. In some example embodiments, both the cell 130-1 and the cell 130-2 may be generated by the same network device, e.g., the second apparatus 120. In some further example embodiments, the cell 130-1 and the cell 130-2 may be generated by two different network devices. By way of example, the cell 130-1 may be generated by the same network device, e.g., the second apparatus 120, while the cell 130-2 may be generated by a further network device (not shown in FIG. 1). In some examples, the cell 130-1 may be a primary cell (PCell) for the first apparatus 110, e.g., the UE, and the cell 130-2 may be a secondary cell (SCell) for the first apparatus 110.

It is to be understood that the number of devices and their connections shown in FIG. 1 are only for the purpose of illustration without suggesting any limitation. The communication environment 100 may include any suitable number of devices configured to implement example embodiments of the present disclosure. Although not shown, it would be appreciated that one or more additional devices may be located in the communication environment 100, and one or more additional cells may be deployed in the communication environment 100. It is noted that although illustrated as a network device, the second apparatus 120 may be another device than a network device. Although illustrated as a terminal device, the first apparatus 110 may be another device than a terminal device.

In the following, for the purpose of illustration, some example embodiments are described with the first apparatus 110 operating as a UE and the second apparatus 120 operating as a base station. However, in some example embodiments, operations described in connection with a terminal device may be implemented at a network device or other device, and operations described in connection with a network device may be implemented at a terminal device or other device.

In some example embodiments, a transmission direction from the second apparatus 120 to the first apparatus 110 is referred to as a downlink (DL), while a transmission direction from the first apparatus 110 to the second apparatus 120 is referred to as an uplink (UL). In DL, the second apparatus 120 is a transmitting (TX) device (or a transmitter) and the first apparatus 110 is a receiving (RX) device (or a receiver). In UL, the first apparatus 110 is a TX device (or a transmitter) and the second apparatus 120 is a RX device (or a receiver).

Communications in the communication environment 100 may be implemented according to any proper communication protocol(s), comprising, but not limited to, cellular communication protocols, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

For network energy savings for NR, it has been specified about the synchronization signal block (SSB)-less secondary cell (SCell) operation, including SCell activation, Layer 1 (L1)/Layer 3 (L3) measurements etc., for inter-band carrier aggregation (CA) for frequency range 1 (FR1) co-located cells.

It is to be further specified to support on-demand SSB SCell operation for UEs in connected mode configured with CA. The procedures and signalling methods are to be specified for both intra-band/inter-band CA. Triggering methods are used to select from UE uplink wake-up-signal using an existing signal/channel, cell on/off indication via backhaul, SCell activation/deactivation signaling.

On-demand SSB transmission may be used by UE for at least SCell time/frequency synchronization, L1/L3 measurements and SCell activation, and may be supported for frequency range 1 (FR1) and frequency range 2 (FR2) in non-shared spectrum.

Moreover, procedures and signaling approaches are to be studied to support on-demand system information block 1 (SIB1) for UEs in idle/inactive mode, for example, triggering methods by uplink wake-up-signal using an existing signal/channel, wake-up-signal configuration provisioning to UE (no modification of SSB), information exchange between gNBs at least for the configuration of wake-up signal, or checkpoint for normative work.

It is to be specified about adaptation of common signal/channel transmissions, for example, adaptation of SSB in time domain (e.g. adapting periodicity), adaptation of physical random access channel (PRACH) in time domain, adaptation of PRACH in spatial domain (e.g. non-uniform PRACH resources per SSB), adaptation of paging occasions including confining the paging occasions in the time domain (no paging latency increase). Additionally, there may be no negative impact to legacy UEs, unless significant benefits are shown.

Further, on-demand SSB may be considered during the SCell activation and also for the L1 measurements. The L1 measurements based on on-demand SSB may be periodic, semi-persistent or aperiodic. It has been agreed to at least support L1 measurement based on on-demand SSB. For L1 measurement based on on-demand SSB, periodic, semi-persistent, and aperiodic L1 measurement reports based on existing channel state information (CSI) framework may be supported. Additionally, potential enhancements of CSI report configuration and/or triggering/activation mechanisms for L1 measurement based on on-demand SSB may be studied. Moreover, the long-term measurement (LTM) may be supported.

On-demand SSB may be triggered by gNB for different scenarios/cases, for example, at least including Scenario #2 and Case #1, Scenario #2 and Case #2, Scenario #2A and Case #1, Scenario #2A and Case #2. The scenarios indicate in what conditions the On-demand SSB is triggered. The cases are differentiated by if there is any always-on SSB in addition to OD-SSB in the cell.

For Case #1, once on-demand SSB is triggered, its transmission may be in a periodic manner. It is not implied that periodic on-demand SSB is transmitted indefinitely after triggered. Scenario #2A may refer to "when UE receives SCell activation command". Scenario #3A may refer to "after UE receives SCell activation command until SCell activation is completed". Scenario #3B may refer to "when SCell activation is completed and SCell is activated" or "after SCell activation is completed and SCell is activated". Additionally, always-on SSB may be supported in addition to On-demand SSB for example in Case #2.

Moreover, timing for on-demand SSB transmission (e.g. when the triggered SSB starts and ends) may be studied.

For the scenarios for on-demand SSB SCell operation, down-selection (both may be selected) between the two scenarios may be discussed. For Scenario #2, SCell may be configured to a UE but before the UE receives SCell activation command. For Scenario #3, after UE receives SCell activation command, SCell for which activation is completed may not be precluded. In this case, the SCell activation is completed. Moreover, application timing between NW triggering message and on demand SSB transmission may be studied.

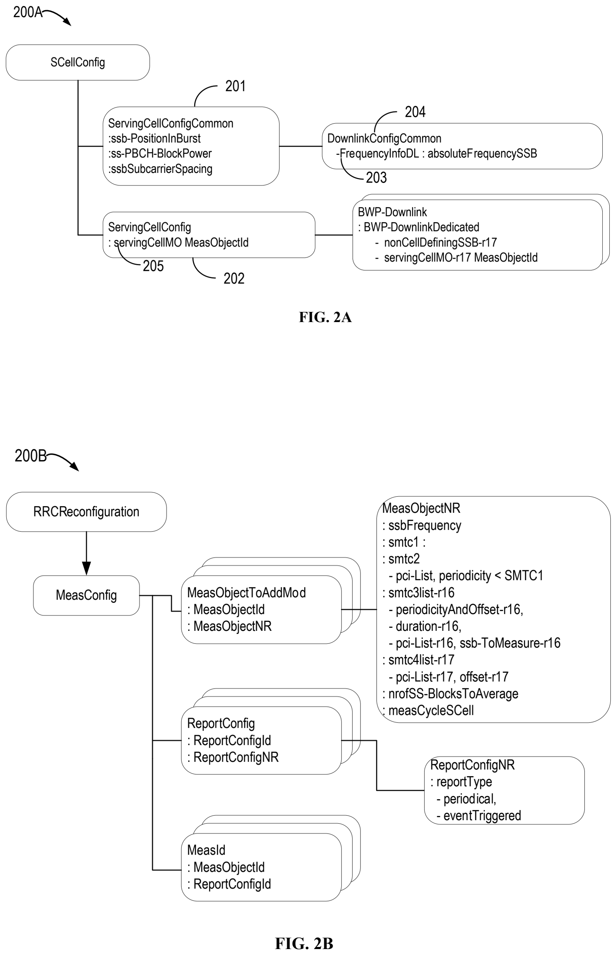

FIG. 2A illustrates a schematic diagram 200A of an example of SSB configuration for a serving cell. The SSB configuration may be denoted as ScellConfig and may include common information 201 of serving cell configurations and at least one serving cell configuration 202.

The legacy SSB configurations may be provided within the common information 201, indicated by *ServingCellConfigCommon* in FIG. 2A. Most of the SSB attributes may be available within this information element (IE), but the SSB frequency (for example, indicated by *ssbFrequency or absoluteFrequencySSB*) may be provided as part of *FrequencyInfoDL* 203 in *DownlinkConfigCommon* 204.

FIG. 2B illustrates a schematic diagram 200B of an example of MeasConfig framework. The *MeasConfig* framework illustrated in FIG. 2B may allow UEs to be configured with one or more measurement objects (e.g., indicated by *MeasObjectNR*) which tells the UEs the objects or the carriers to measure.

As shown in FIG. 2A, the measurements on serving cells may be configured by serving cell measurement object (*servingCellMO*) 205 in a serving cell configuration (*servingCellConfig* 202). The *servingCellConfig* 202 may be associated with an *measObjectID* as indicated in *measConfig* of FIG. 2B. In the associated measurement object, the *ssbFrequency* may be configured to indicate the center frequency of SSB to be measured.

The serving cell measurement object (*servingCellMO*) may be associated with *measObjectId* of the *MeasObjectNR* in the *MeasConfig* which is associated to the serving cell. For this *MeasObjectNR,* the following relationship *applies* between this *MeasObjectNR* and *frequencyInfoDL* in ServingCellConfigCommon / *ServingCellConfigCommonSIB* of the serving cell. If *ssbFrequency* is configured, its value may be the same as the *absoluteFrequencySSB* and if *csi-rs-ResourceConfigMobility* is configured, the value of its *subcarrierSpacing* may be present in one entry of the *scs-SpecificCarrierList.* The *csi-RS-CellListMobility* may include an entry corresponding to the serving cell (with *cellId* equal to *phyCellId* in *ServingCellConfigCommon*) and the frequency range indicated by the *csi-rs-MeasurementBW* of the entry in *csi-RS-cellListMobility* may be included in the frequency range indicated by the entry of the *scs-SpecificCarrierList.*

The *servingcellMO* may be associated with one measurement object (MO) which includes one *ssbfrequency.* The value of *ssbFrequency* is set to an AFCRN value. A UE may be required to perform measurement on the MO indicated by *servingCellMO* for serving cell measurement. The UE may derive the serving cell measurement result based on the SSB/CSI-RS (reference signal) resources in the MO indicated by *servingCellMO.*

When the UE has a *measConfig,* the UE may perform reference signal receiving power (RSRP) and reference signal receiving quality (RSRQ) measurement for each serving cell for which *servingCellMO* is configured. If the *reportConfig* associated with at least one *measId* included in the *measIdList* within *VarMeasConfig* contains an *rsType* set to *ssb* and *ssb-ConfigMobility* is configured in the *measObject* indicated by the *servingCellMO.* If the *reportConfig* associated with at least one *measId* included in the *measIdList* within *VarMeasConfig* contains a *reportQuantityRS-Indexes* and *maxNrofRS-IndexesToReport* and contains an *rsType* set to *ssb.* The UE may derive layer 3 filtered RSRP and RSRQ per beam for the serving cell based on SS (synchronization signal)/PBCH (physical broadcast channel) block.

For on-demand SSB (OD-SSB) operation within a SCell, the network may configure at least one OD-SSB in the SCell with or without always-on SSB. When multiple OD-SSBs are configured, e.g., radio resource control (RRC) message, the network may indicate which OD-SSB to activate in the OD-SSB activation command, e.g., medium access control (MAC) control element (CE) or RRC signaling. That is, UE may be able to know which OD-SSB to receive/measure when OD-SSB is activated. The UE may measure OD-SSB only when it is activated.

As the measurement is based on the activated OD-SSB among multiple configured OD-SSBs, network may configure separate MOs for the OD-SSB configuration in different frequency carriers. And UE may measure corresponding MO when the OD-SSB in the MO is activated.

The UE may be configured by the *servingCellMO* to derive the serving cell measurement. If *servingCellMO* is configured with one of the measurement object index (ID), e.g., *MeasObjectID*=1, the UE may not be able to derive the serving cell measurement if the OD-SSB corresponding to the *MeasObjectId*=1 is not activated.

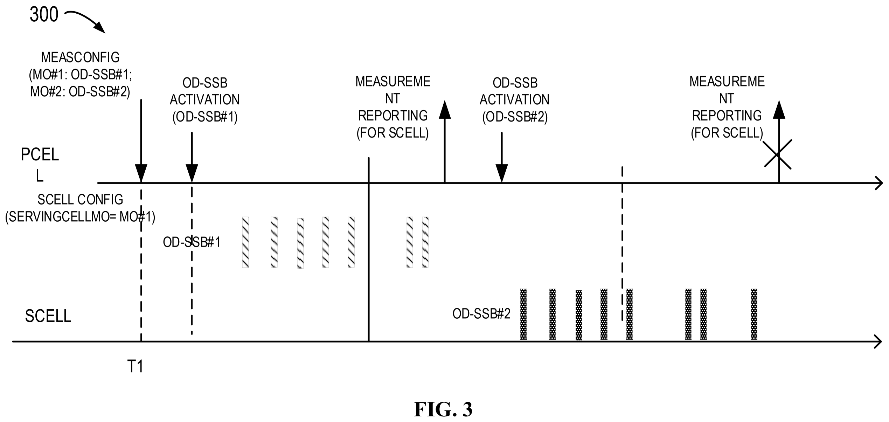

FIG. 3 illustrates an example diagram 300 of cell measurement with two on-demand SSBs in a SCell. In this example, a UE may be configured with multiple OD-SSB configurations on different frequency carriers, e.g. OD-SSB#1 and OD-SSB#2. Separate MOs may be configured for each of OD-SSB configurations for the measurement, i.e., denoted as MO#1 and MO#2, respectively.

At some time points, the network, e.g., a gNB, may send OD-SSB activation signaling to activate OD-SSB#1. The UE may be expected to measure OD-SSB#1 on the SCell. Based on the indicated *servingCellMO,* i.e., MO#1, The UE may derive the measurement results from the OD-SSB#1 corresponding to MO#1 and send a measurement report for the SCell.

Some time later, the network may send OD-SSB activation signaling to activate OD-SSB#2. The UE may be expected to measure OD-SSB#2 on the SCell. However, the *servingCellMO* is indicated as MO#1, so the UE may derive the cell measurement result for the SCell from the measurement on MO#1. Since there is no SSB being transmitted on MO#1, the measurement report may not be triggered or a low RSRP may be triggered for the SCell.

Therefore, the *servingCellMO* configured with a fixed value, i.e., *MeasobjectId* may not be applicable for OD-SSB based Scell, particularly in a situation where multiple OD-SSBs have been configured for the Scell.

Similarly, when both OD-SSB and always-on SSB are configured in an SCell, it is unclear based on which SSB(s) the UE may derive the cell measurement result. One way is to configure *servingCellMO* to the MO including the always-on SSB. But if OD-SSB is activated, the UE may need to use the OD-SSB as the reference signaling for the cell measurement. The *servingCellMO* configured with the MO including the always-on SSB may not be able to serve the purpose.

Another problem is that there may be limitations how many measurement objects UE may support. As each OD-SSB needs separate measurement object it becomes easily going over the UE limitation. For example, Depending on the existing UE capability, maximum 7 NR SSB inter-frequency carriers may be configured by a primary secondary cell (PSCell). Depending on the UE capability, 8 NR inter-frequency carriers including SSB and CSI-RS in total may be configured by the PSCell. There is a need for the UE to be able to derive the proper cell measurement result when OD-SSB is in operation in a SCell.

Embodiments of the present disclosure propose a solution for serving cell measurement configuration. In the proposed solution, in the case where an on-demand synchronization signal is activated for the cell, a first apparatus determines a measurement object from at least one measurement object configured for the secondary cell based on the activated synchronization signal. Then the first apparatus determines the measurement result for the cell by measuring one or more synchronization signals including the activated on-demand synchronization signal at least based on the determined measurement object.

In this way, the first apparatus, e.g., a UE, is able to know how to derive the cell measurement result, for example, based on the OD-SSB, the always-on SSB, or the combination of the OD-SSB and the always-on SSB. As such, the measurement result of the synchronization signal for the cell can be obtained in a more proper and faster way.

Example embodiments of the present disclosure will be described in detail below with reference to the accompanying drawings.

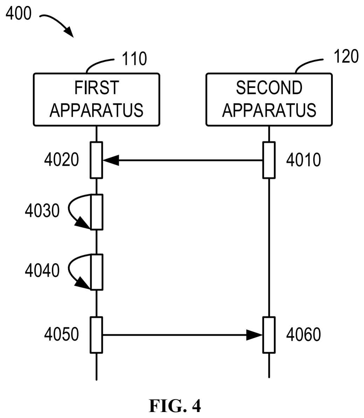

Reference is made to FIG. 4, which illustrates a signaling flow 400 for serving cell measurement configuration in accordance with some example embodiments of the present disclosure. For the purposes of discussion, the signaling flow 400 will be discussed with reference to FIG. 1. The FIG. 4 involves the first apparatus 110 and the second apparatus 120 of FIG. 1. In some implementations, the first apparatus 110 may be implemented as or include a terminal device, e.g., a UE, and the second apparatus 120 may be implemented as or include a network device, e.g., a gNB or a base station.

In operation, the second apparatus 120 transmits (4010), to the first apparatus 110, a configuration indicating at least one measurement object for a plurality of on-demand synchronization signals for a cell, such as secondary cell (SCell). It is to be understood that although the example embodiments are illustrated with respect to the SCell, other cells, such as PCell, PSCell and so on are also applicable. Correspondingly, the first apparatus 110 receives (4020) the configuration from the second apparatus 120. For example, the second apparatus 120 may configure multiple OD-SSBs for the SCell to the first apparatus 110 in a RRC message.

In some cases, the configuration may include one measurement object (MO) for each OD-SSB on different carriers. Alternatively, in some cases, the configuration may include a single MO for all OD-SSBs on different carriers.

If an on-demand synchronization signal is activated for the secondary cell, the first apparatus 110 determines (4030) a measurement object from the received configuration for the secondary cell based on the activated synchronization signal. Specifically, if, in the received configuration, one measurement object is configured for each OD-SSB on different carriers, the first apparatus 110 may determine the measurement object corresponding to the synchronization signal to be measured. Alternatively, if, in the received configuration, a single measurement object is configured for all OD-SSBs on different carriers, the first apparatus 110 may determine this single measurement object to be used for measuring SSBs.

At least based on the determined measurement object, the first apparatus 110 determines (4040) a measurement result for the secondary cell by measuring one or more synchronization signals .

In some example embodiments, the second apparatus 120 may transmit, to the first apparatus 210 in said configuration, a cell configuration including an index of a measurement object of a first value. In this case, the cell configuration may be indicated by *servingCellConfig* and the index of the measurement object may be indicated by *measObjectID.*

In particular, the first value may be predefined or preconfigured or using a reserved value of existing configuration. For example, the first value may be predefined in specifications. Alternatively, the first value may be configured by the second apparatus 120 in advance. The first value may be, for example, -1. It is to be understood that the first value may be any proper value that is predefined or predetermined or reserved to indicate that the UE may determine the measurement object associated with the activated OD-SSB. In one example, the ServingCellMO in the cell configuration is set to the first value that directs the UE to not use the first value as the MO for the OD-SSB. Instead, the first apparatus 110 may determine the measurement object based on the activated on-demand synchronization signal.

Upon receiving the index of a measurement object which is of the first value, the first apparatus 110 may be aware that the index of the measurement object does not indicate any existing measurement object, and it may determine the measurement object based on the activated on-demand synchronization signal. Specifically, the first apparatus 110 may determine, from the at least one measurement object for the cell, the measurement object corresponding to the activated synchronization signal. For example, if the OD-SSB#1 is activated, the first apparatus 110 may determine the MO as the MO corresponding to the OD-SSB#1.

In the above cases, each synchronization signal may be associated with one measurement object. Alternatively, a plurality of synchronization signals configured with the same frequency resource may be associated with one measurement object. For instance, if there are more than one OD-SSB configured with the same Absolute Radio Frequency Channel Number (ARFCN), a single MO may be configured associated with these OD-SSBs.

The first apparatus 110 may determine the measurement result for the SCell by measuring the activated synchronization signal based on the determined measurement object.

In some alternative example implementations, at least one measurement object may include a single measurement object for a plurality of synchronization signals. In this case, the second apparatus 120 may transmit, to the first apparatus 110, a cell configuration including an index of the measurement object. Correspondingly, the first apparatus 110 may receive the cell configuration. The measurement object may include a frequency resource of a second value.

The second value may be predefined or preconfigured or reserved. For example, the second value may be -1. It is to be understood that the above example of the second value is just discussed for illustration, rather than limitation. The second value may be another appropriate value in other example embodiments of the present disclosure. For instance, the second value may indicate that the frequency resource of the measurement object does not indicate any of an existing frequency resource in the at least one measurement object.

The first apparatus 110 may determine frequency information of the activated synchronization signal. Then, the first apparatus 110 may determine the measurement result for the SCell by measuring the activated synchronization signal based on the corresponding measurement object and the frequency information. For example, if the OD-SSB#1 is activated, the first apparatus 110 may determine the frequency information as the frequency information of the OD-SSB#1. The first apparatus 110 may measure the OD-SSB#1 for the cell measurement based on the measurement object and the frequency information.

Additionally, in some example embodiments, the one or more synchronization signals measured by the first apparatus 110 in the determination (4040) of the measurement result may include a first type of synchronization signal and a second type of synchronization signal different from the first type of the synchronization signal. In particular, the first type of synchronization signal may include an on-demand synchronization signal block, e.g., the OD-SSB, and the second type of synchronization signal may include an always-on synchronization signal block, e.g., the always-on SSB.

In some cases, the second apparatus 120 may transmit, to the first apparatus 110, an indication indicating that the first type of synchronization signal is to be measured for the secondary cell. Correspondingly, the first apparatus 110 may receive the indication from the second apparatus 120. In some example embodiments, an IE *"servingCellMOAddi"* may be used as the indication indicating that the first type of synchronization signal is to be measured for the secondary cell.

In some example embodiments, the first apparatus 110 may transmit, to the second apparatus 120, capability information indicating support of measuring the first type of synchronization signal and the second type of synchronization signal. For example, before transmitting the indication indicating that the first type of synchronization signal is to be measured for the secondary cell, the second apparatus 120 may receive the capability information from the first apparatus 110.

In the above cases where the first apparatus 110 receives the indication indicating that the first type of synchronization signal is to be measured for the secondary cell, it may determine the measurement result for the secondary cell based on a determination whether a synchronization signal of the first type is activated. For example, if the first type of synchronization signal is activated, the measurement result may be determined based on the first type of synchronization signal. Alternatively or in addition, if the synchronization signal of the first type is not activated, the measurement result for the secondary cell may be determined based on the second type of synchronization signal.

Alternatively, in some example embodiments, the second apparatus 120 may transmit, to the first apparatus 110, an indication indicating that the first type of synchronization signal is to be combined with the second type of synchronization signal in the determination of the measurement result for the secondary cell. This indication is also referred to as "combination indication" for discussion. For example, an IE *"ODSSBComb"* may be used to indicate whether the first type of synchronization signal is to be combined with the second type of synchronization signal.

Upon receiving this combination indication from the second apparatus 120, the first apparatus 110 may determine the measurement result for the secondary cell by combining measurements performed on the first type of synchronization signal and the second type of synchronization signal. Such determination may be performed based on which synchronization signal is activated.

Specifically, if the first type of synchronization signal is activated, the measurement result may be determined based on both the first type of synchronization signal and the second type of synchronization signal. Alternatively, if the first type of synchronization signal is not activated, the measurement result may be determined based on the second type of synchronization signal.

After the measurement result for the secondary cell is determined, still referring to FIG. 4, the first apparatus 110 transmits (4050) the measurement result to the second apparatus 120. Correspondingly, the second apparatus 120 receives (4060) the measurement result from the first apparatus 110.

In this way, the first apparatus 110 may be able to determine the measurement object from the received configuration based on the activated synchronization signal, and determine the measurement result for the secondary cell based on the measurement object and the activated synchronization signal. Thus, the effectiveness and the efficiency of cell measurement may be improved.

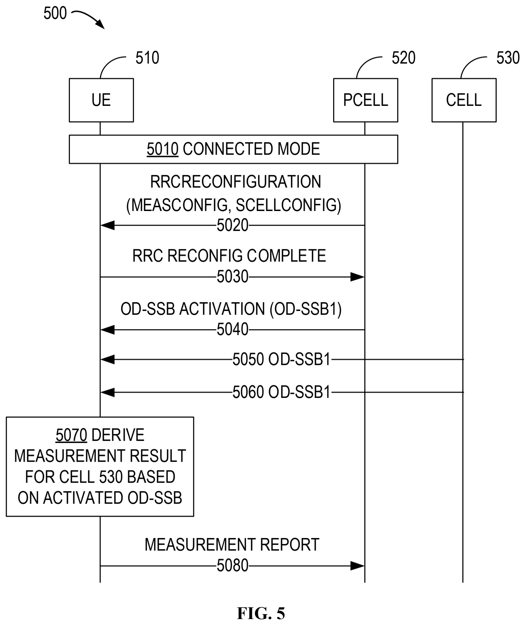

Reference is made to FIG. 5, which illustrates an example signaling flow 500 for serving cell measurement configuration in accordance with some example embodiments of the present disclosure. The example embodiments discussed with respect to FIG. 5 may be considered as implementations of the example embodiments discussed with reference to FIG. 4. For the purposes of discussion, the signaling flow 500 will be discussed with reference to FIG. 1. The FIG. 5 involves a UE 510, a PCell 520, and a Cell 530 which may be a secondary cell. The UE 510 may be an implementation of the first apparatus 110 of FIG. 1, the PCell 520 may be the cell 130-1 in FIG. 1, and the cell 530 may be the cell 130-2 in FIG. 1. The cell 530 may be implemented as a secondary cell operating an on-demand SSB (OD-SSB). The PCell 520 and/or the cell 530 may be managed by the second apparatus 120 in FIG. 1.

At 5010, the UE 510 may be in a connected mode with the PCell 520. At 5020, the PCell 520 may add Cell 530 for carrier aggregation operation and the OD-SSB configurations for Cell 530. In particular, the PCell 520 may transmit a RRC message, such as a RRCReconfiguration message, to the UE 510. The RRCReconfiguration message may include *measConfig* and/or *SCellconfig.*

In the example of FIG. 5, one MO may be configured for each of the configured OD-SSB, where *ssbFrequency* in a MO may be equal to the ARFCN-ValueNR in the corresponding OD-SSB configuration. The PCell 520 may also configure *ServingCellMO* as a first value, which may be a special value ,e.g., a value different from any of the *measObjectld.*

Two OD-SSB patterns may be configured on different frequencies, e.g., OD-SSB1 on ARFCN1 and OD-SSB2 on ARFCN2. In some example implementations, the Cell 530 may be operating with only OD-SSB, i.e., no always-on SSB is transmitted in the Cell 530.

Additionally, a *servingCellMO* may be configured for the Cell 530 to derive the measurement result for the Cell 530. Multiple measurement objects may be configured for different OD-SSB configurations on different carrier frequencies. For instance, the MO#1 may be configured with ARFCN1 on which OD-SSB1 to be measured once activated, and the MO#2 may be configured with ARFCN2 on which OD-SSB2 to be measured once activated.

Upon receiving the *ServingCellMO* with a special value, the UE 510 may derive the cell measurement result based on the activated OD-SSB. Alternatively, the UE 510 may determine the MO associated with the activated OD-SSB and derive the cell measurement result based on the determined MO. If there are more than one OD-SSB configured with the same ARFCN or more generally the same measurement configuration, single MO may be associated with these OD-SSBs. This will reduce the number of configured Mos because no redundant MOs are configured. For example, the PCell 520 may indicate *servingCellMO* as a first value, which may be a special value, e.g., -1. The UE 510 may be indicated that the cell measurement result of the Cell 530 may be derived without referring to the MO as indicated by the *servingCellMO,* but based on the MO corresponding to the activated OD-SSB.

In the above scenario, for example, the *measConfig* may include the *measObjectID*=1*, ssbFrequency=*ARFCN1*, measObjectID*=2, and *ssbFrequency*=*ARFCN*2. The *servingCellconfig* of Cell 530 may include *servingCellMO*=-1.

Alternatively, the second apparatus 120 may configure, via the PCell 520, a single MO for the multiple OD-SSB configurations. The IE *ssbFrequency* in the single MO may be set to a second value, e.g., a special value, e.g., a value different from any of the *ARFCN-ValueNR* of the OD-SSB configuration. The *servingCellMO* may be configured as the *MeasObjectId* of the single MO. For example, the *measConfig* may include *measObjectID=1,* and *ssbFrequency*=-1. The *servingCellconfig* of Cell 530 may include *servingCellMO=1.*

Upon receiving the *ServingCellMO,* the UE 510 may derive the cell measurement result (also referred to the measurement report) based on the MO indicated by *servingCellMO.* As the *ssbFrequency* in this MO is a special value, the UE 510 may derive the cell measurement result based on the MO including the activated OD-SSB.

The cell measurement result may be reported only if OD-SSB is activated. If the OD-SSB is not activated, the UE 510 may not need to report the cell measurement result.

In these cases, at 5030, the UE 510 may transmit a RRC reconfiguration complete message to the PCell 520 as an acknowledge message to the RRCReconfiguration message.

Then, at 5040, an OD-SSB activation command may be transmitted from the PCell 520 to activate the transmission of one OD-SSB, e.g., the OD-SSB1. The UE 510 may receive the OD-SSB1 from the Cell 530 at 5050 and/or 5060. Then, at 5070, the UE 510 may derive the measurement result of the Cell 530 based on the activated OD-SSB (e.g., OD-SSB1).

Subsequently, at 5080, the UE 510 may transmit the measurement report for the Cell 530 based on the measurement result on the MO including activated OD-SSB.

In this way, the UE 510 may be able to determine the MO for the OD-SSB based on the value of the *servingCellMO* or the *ssbFrequency.* The UE 510 may determine the measurement result based on the MO and the activated OD-SSB. Thus, the flexibility and the efficiency of the serving cell measurement may be improved. The effectiveness of the serving cell measurement configuration may be enhanced.

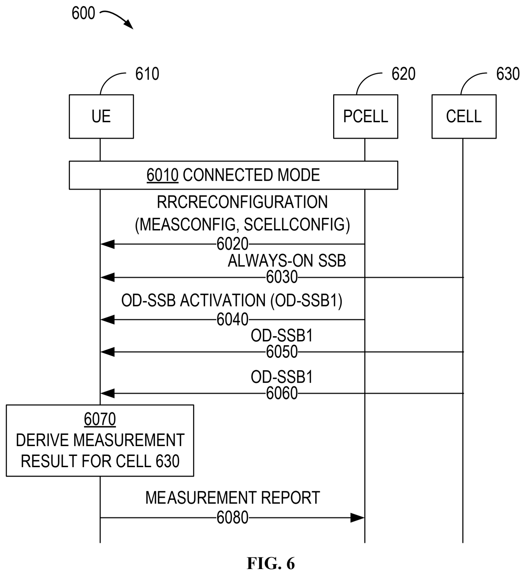

In some example embodiments, OD-SSB may be configured in an SCell with an always-on SSB. In this case, one MO may be configured for always-on SSB and the *servingCellMO* may be set to the *MeasObjectId* of the MO. Reference is made to FIG. 6, which illustrates an example signaling flow 600 for serving cell measurement configuration in accordance with some example embodiments of the present disclosure.

The example embodiments discussed with respect to FIG. 6 may be implementations of the example embodiments discussed with reference to FIG. 4. For the purposes of discussion, the signaling flow 600 will be discussed with reference to FIG. 1. The FIG. 6 involves a UE 610, a PCell 620, and a Cell 630 which may be a secondary cell. The UE 610 may be an implementation of the first apparatus 110 of FIG. 1, and the PCell 620 may be the cell 130-1 in FIG. 1, and the cell 630 may be the cell 130-2 in FIG. 1. The cell 630 may be implemented as a secondary cell operating the OD-SSB. The PCell 620 and/or the cell 630 may be managed by the second apparatus 120 in FIG. 1.

At 6010, the UE 610 may be in connected mode with the PCell 620. At 6020, the PCell 620 may add Cell 630 into CA operation and indicate the OD-SSB configurations for Cell 630. In particular, the PCell 620 may transmit a RRCReconfiguration message to the UE 610. The RRCReconfiguration message may include a measurement configuration (*measConfig*) and/or a secondary cell configuration (*SCellconfig*).

In FIG. 6, the second apparatus 120 may configure, via the PCell 620, an additional *servingCellMO,* e.g., an IE *servingCellMO _addi,* for the OD-SSB. If the *servingCellMO_addi* is configured or present, the UE 610 may derive the cell measurement result based on OD-SSB. If the *servingCellMO*_*addi* is not configured or present, the UE 610 may derive the cell measurement result based on always-on SSB.

In an example, in the RRCReconfiguration message, the *measConfig* may include:
measObjectID=0, ssbFrequency=ARFCN0
measObjectID=1, ssbFrequency=ARFCN1
measObjectID=2, ssbFrequency=ARFCN2

Meanwhile, the servingCellconfig for the Cell 630 may include:
servingCellMO = 0
servingCellMOAddi = -1

As an alternative, in the RRCReconfiguration message, the *measConfig* may include:
measObjectID=0, ssbFrequency=ARFCN0
measObjectID=1, ssbFrequency =- 1.

Meanwhile, the servingCellconfig for the Cell 630 may include:
servingCellMO=0
servingCellMOAddi = 1

At 6020, a MO may be configured for always-on SSB (AO-SSB), i.e., MO#0 hence the *servingCellMO* may be set to the MO corresponding to the always-on SSB, i.e., *servingCellMO =* 0. Additionally, *servingCellMOAddi* may be used for OD-SSB. If *servingCellMOAddi* is configured or present, the UE 610 may derive the Cell 630 measurement result based on OD-SSB when it is activated. Otherwise, the UE 610 may derive the measurement result of the Cell 630 based on the AO-SSB irrespective of OD-SSB is activated or not. The servingCellMOAddi may be configured as illustrated in Fig.5.

For example, the *measConfig* may include *servingCellMO*=0 and *servingCellMOAddi=-1.* Alternatively, the *measConfig* may include *measObjectID=1, ssbFrequency=-1, servingCellMO=0* and *servingCellMOAddi*=1. In these cases, the UE 610 may derive the measurement result of Cell 630 based on OD-SSB, if *servingCellMOAddi* is present. The UE 610 may derive the measurement result of the Cell 630 based on AO-SSB, if *servingCellMOAddi* is not present.

At 6030, an always-on SSB (AO-SSB) may be transmitted from the Cell 630 AO-SSB regularly. The UE 610 may receive the AO-SSB from the Cell 630. Then, at 6040, an OD-SSB activation command may be sent from the PCell 620 to activate the transmission of one OD-SSB, e.g., the OD-SSB1. The UE 610 may receive the OD-SSB1 from the Cell 630 at 6050 and/or 6060. Then, at 6070, the UE 610 may derive the measurement result of the Cell 630 based on the activated OD-SSB (e.g., OD-SSB1) as *servingCellMOAddi* is present.

Subsequently, at 6080, the UE 610 may transmit a measurement report for the Cell 630 based on the measurement result on the MO including activated OD-SSB.

In this way, the UE 610 may be able to determine the MO for the OD-SSB based on the value of the *servingCellMO,* the *ssbFrequency,* or the *servingCellMOAddi.* The UE 610 may determine the measurement result for the secondary cell based on the MO and the activated OD-SSB. Thus, the flexibility and the efficiency of the serving cell measurement may be improved. The effectiveness of the serving cell measurement configuration may be enhanced.

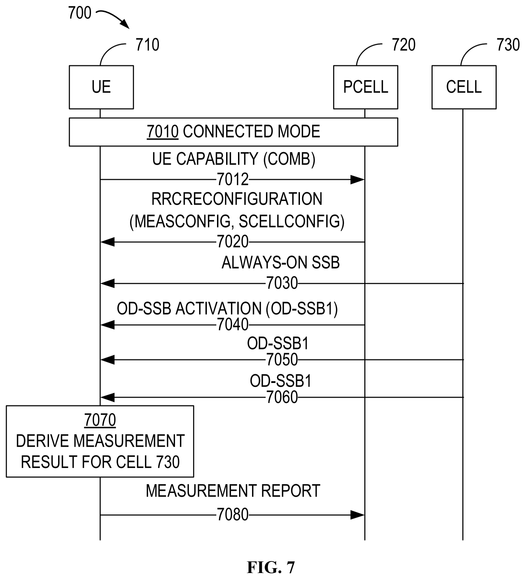

In some example embodiments, the UE may support the combination of AO-SSB and OD-SSB. Reference is made to FIG. 7, which illustrates an example signaling flow 700 for serving cell measurement configuration in accordance with some example embodiments of the present disclosure.

The example embodiments discussed with respect to FIG. 7 may be implementations of the example embodiments discussed with reference to FIG. 4. For the purposes of discussion, the signaling flow 700 will be discussed with reference to FIG. 1. The FIG. 7 involves a UE 710, a PCell 720, and a Cell 730 which may be a secondary cell. The UE 710 may be an implementation of the first apparatus 110 of FIG. 1, and the PCell 720 may be the cell 130-1 in FIG. 1, and the cell 730 may be the cell 130-2 in FIG. 1. The cell 730 may be implemented as a secondary cell operating the OD-SSB. The PCell 720 and/or the cell 730 may be managed by the second apparatus 120 in FIG. 1.

In the example embodiments of FIG. 7, the Cell 730 is operating with both always-on SSB and OD-SSB. At 7010, the UE 710 may be in connected mode with PCell 720. At 7012, the UE 710 may transmit, to the PCell 720, the UE capability information indicating support of measuring the combined AO-SSB and OD-SSB. In some example embodiments, the procedure of 7012 may be performed before or after the procedure of 7020.

At 7020, the PCell 720 may add Cell 730 into CA operation and indicate the OD-SSB configurations for Cell 730. In particular, the PCell 720 may transmit a RRCReconfiguration message to the UE 710. The RRCReconfiguration message may include *measConfig* or *SCellconfig.*

In an example, in the RRCReconfiguration message, the *measConfig* may include:
measObjectID=0, ssbFrequency=ARFCN0
measObjectID=1, ssbFrequency=ARFCN1
measObjectID=2, ssbFrequency=ARFCN2

Meanwhile, the servingCellconfig for the Cell 730 may include:
servingCellMO = 0
servingCellMOAddi = -1
ODSSBComb = TRUE.

In some example embodiments, at 7020, the PCell 720 may further indicate if combination of AO-SSB and OD-SSB is considered when deriving the cell measurement result. For example, If the *servingCellMOAddi* and an IE *ODSSBComb* are configured or present, the UE 710 may derive cell measurement result based on both always-on SSB and OD-SSB when OD-SSB is activated and derive cell measurement result based on always-on SSB if OD-SSB is not activated. As illustrated, in this case, the *measConfig* may include the *servingCellMOAddi=-1* and *ODSSBComb*= TRUE. Alternatively, the combination of AO-SSB and OD-SSB may also be indicated in OD-SSB activation message 7040 or any of the other messages from network to the UE.

For instance, the UE 710 may derive the cell measurement result based on the combination of the two SSBs. Hence the measurement delay may be based on the minimum periodicity of the two SSBs, or the distance between two consecutive SSBs, which may be reduced comparing with using single type of SSB.

Alternatively, if *servingCellMOAddi* is configured or present but the *ODSSBComb* is not configured or present, the UE 710 may derive cell measurement result based on OD-SSB when OD-SSB is activated and derive cell measurement result based on always-on SSB if OD-SSB is not activated. For example, the UE 710 may derive the cell measurement result without considering combination of the two SSBs. Hence the measurement delay may be based on the OD-SSB periodicity and the SSB measurement timing configuration (SMTC) if configured.

At 7030, an AO-SSB may be transmitted regularly or periodically. The UE 710 may receive the AO-SSB from Cell 730. Then, at 7040, an OD-SSB activation command may be sent from the PCell 720 to activate the transmission of one OD-SSB, e.g., the OD-SSB1. The UE 710 may receive the OD-SSB1 from Cell 730 at 7050 and/or 7060. Then, at 7070, the UE 710 may derive the measurement result of the Cell 730 based on the activated OD-SSB (e.g., OD-SSB1) and/or the AO-SSB.

Subsequently, at 7080, the UE 710 may transmit a measurement report for the Cell 730 based on the measurement result on the AO-SSB and/or the activated OD-SSB.

In this way, the UE 710 may be able to determine the MO to be measured based on the value of the *servingCellMO,* the *ssbFrequency,* the *servingCellMOAddi,* and the *ODSSBComb.* The UE 710 may determine the measurement result for the secondary cell based on the MO, the activated OD-SSB and/or AO-SSB. Thus, the flexibility and the efficiency of the serving cell measurement may be improved. The effectiveness of the serving cell measurement configuration may be enhanced.

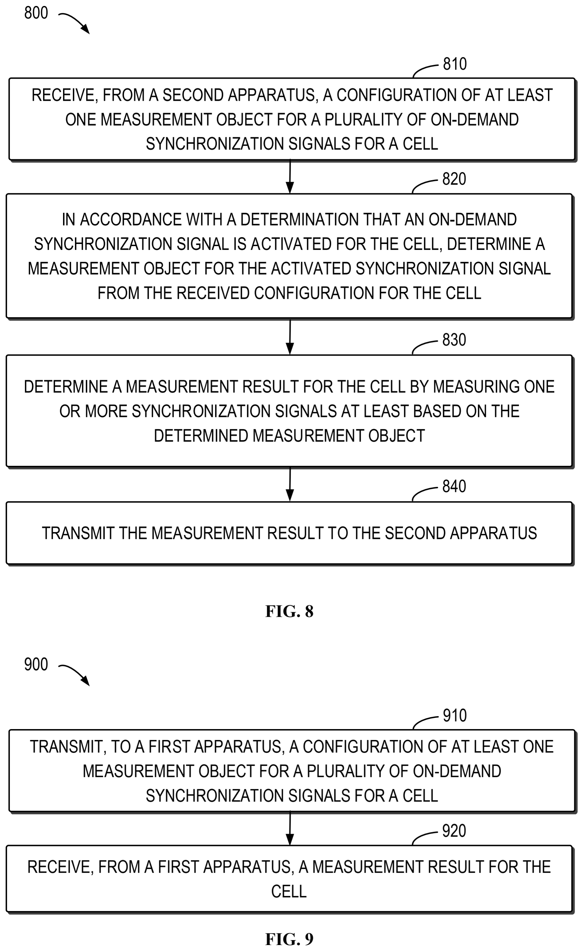

FIG. 8 shows a flowchart of an example method 800 implemented at a first apparatus in accordance with some example embodiments of the present disclosure. For the purpose of discussion, the method 800 will be described from the perspective of the first apparatus 110 in FIG. 1.

At block 810, the first apparatus 110 receives, from a second apparatus, a configuration of at least one measurement object for a plurality of on-demand synchronization signals for a cell.

At block 820, in accordance with a determination that an on-demand synchronization signal is activated for the cell, the first apparatus 110 determines a measurement object for the activated on-demand synchronization signal from the received configuration for the cell.

At block 830, the first apparatus 110 determines a measurement result for the cell by measuring one or more synchronization signals at least based on the determined measurement object.

At block 840, the first apparatus 110 transmits the measurement result to the second apparatus.

In some example embodiments, the first apparatus 110 may receive, from the second apparatus, a cell configuration including an index of a measurement object of a first value. The first apparatus 110 may determine, from the at least one measurement object for the cell, the measurement object corresponding to the activated synchronization signal. The first apparatus 110 may determine the measurement result by measuring the activated synchronization signal based on the determined measurement object.

In some example embodiments, the first value may be predefined or preconfigured or reserved.

In some example embodiments, each synchronization signal may be associated with one measurement object. Alternatively, a plurality of synchronization signals configured with the same frequency resource may be associated with one measurement object.

In some example embodiments, the first apparatus 110 may receiving, from the second apparatus, a cell configuration including an identification of the measurement object, the measurement object including a frequency resource of a second value. The first apparatus 110 may determine frequency information of the activated synchronization signal. The first apparatus 110 may determine the measurement result by measuring the activated synchronization signal based on the measurement object and the frequency information.

In some example embodiments, the second value may be predefined or preconfigured or reserved.

In some example embodiments, he first apparatus 110 may receive, from the second apparatus, an indication indicating that the first type of synchronization signal is to be measured for the cell.

In some example embodiments, he first apparatus 110 may transmit, to the second apparatus, capability information indicating support of measuring the first type of synchronization signal and the second type of synchronization signal. The first apparatus 110 may determine the measurement result based on a determination whether a synchronization signal of the first type is activated.

In some example embodiments, if the first type of synchronization signal is activated, the measurement result may be determined based on the first type of synchronization signal. If the synchronization signal of the first type is not activated, the measurement result may be determined based on the second type of synchronization signal.

In some example embodiments, the first apparatus 110 may receive, from the second apparatus, an indication indicating that the first type of synchronization signal is to be combined with the second type of synchronization signal in the determination of the measurement result for the cell. The first apparatus 110 may determine the measurement result for the cell by combining measurements performed on the first type of synchronization signal and the second type of synchronization signal.

In some example embodiments, if the first type of synchronization signal is activated, the measurement result may be determined based on both the first type of synchronization signal and the second type of synchronization signal. Additionally, if the first type of synchronization signal is not activated, the measurement result may be determined based on the second type of synchronization signal.

In some example embodiments, the first type of synchronization signal may include an on-demand synchronization signal block, and the second type of synchronization signal may include an always-on synchronization signal block.

In some example embodiments, the first apparatus may include a terminal device, and the second apparatus may include a network device.

FIG. 9 shows a flowchart of an example method 900 implemented at a second apparatus in accordance with some example embodiments of the present disclosure. For discussion, the method 900 will be described from the perspective of the second apparatus 120 in FIG. 1.

At block 910, the second apparatus 120 transmits, to a first apparatus, a configuration of at least one measurement object for a plurality of on-demand synchronization signals for a cell.

At block 920, the second apparatus 120 receives, from a first apparatus, a measurement result for the cell. The measurement result is determined by measuring one or more synchronization signals at least based on a measurement object. The measurement object is determined for the activated on-demand synchronization signal from the received configuration for the cell.

In some example embodiments, the second apparatus 120 may transmit, to the first apparatus, a cell configuration including an index of a measurement object of a first value.

In some example embodiments, the first value may be predefined or preconfigured or reserved.

In some example embodiments, each synchronization signal may be associated with one measurement object. Alternatively, a plurality of synchronization signals configured with the same frequency resource may be associated with one measurement object.

In some example embodiments, the second apparatus 120 may transmit, to the first apparatus, a cell configuration including an identification of the measurement object, the measurement object including a frequency resource of a second value.

In some example embodiments, the second value may be predefined or preconfigured or reserved.

In some example embodiments, the second apparatus 120 may transmit, to the first apparatus, an indication indicating that the first type of synchronization signal is to be measured for the cell.

In some example embodiments, the second apparatus 120 may receive, from the first apparatus, capability information indicating support of measuring the first type of synchronization signal and the second type of synchronization signal.

In some example embodiments, if the first type of synchronization signal is activated, the measurement result may be determined based on the first type of synchronization signal. If the synchronization signal of the first type is not activated, the measurement result may be determined based on the second type of synchronization signal.

In some example embodiments, the second apparatus 120 may transmitting, to the first apparatus, an indication indicating that the first type of synchronization signal is to be combined with the second type of synchronization signal in the determination of the measurement result for the cell.

In some example embodiments, if the first type of synchronization signal of the first type is activated, the measurement result may be determined based on both the first type of synchronization signal and the second type of synchronization signal. If the first type of synchronization signal of the first type is not activated, the measurement result may be determined based on the second type of synchronization signal.

In some example embodiments, the first type of synchronization signal may include an on-demand synchronization signal block, and the second type of synchronization signal may include an always-on synchronization signal block.

In some example embodiments, the first apparatus may include a terminal device, and the second apparatus may include a network device.

In some example embodiments, a first apparatus capable of performing any of the method 800 (for example, the first apparatus 110 in FIG. 1) may include means for performing the respective operations of the method 800. The means may be implemented in any suitable form. For example, the means may be implemented in a circuitry or software module. The first apparatus may be implemented as or included in the first apparatus 110 in FIG. 1.

In some example embodiments, the first apparatus may include means for receiving, from a second apparatus, a configuration of at least one measurement object for a plurality of on-demand synchronization signals for a cell; means for in accordance with a determination that an on-demand synchronization signal is activated for the cell, determining a measurement object for the activated on-demand synchronization signal from the received configuration for the cell; means for determining a measurement result for the cell by measuring one or more synchronization signals at least based on the determined measurement object; and means for transmitting the measurement result to the second apparatus.

In some example embodiments, the first apparatus may further include: means for receiving, from the second apparatus, a cell configuration including an index of a measurement object of a first value; and means for determining, from the at least one measurement object for the cell, the measurement object corresponding to the activated synchronization signal; and means for determining the measurement result by measuring the activated synchronization signal based on the determined measurement object.

In some example embodiments, the first value may be predefined or preconfigured or reserved.

In some example embodiments, each synchronization signal may be associated with one measurement object. Alternatively, a plurality of synchronization signals configured with the same frequency resource may be associated with one measurement object.

In some example embodiments, the first apparatus may further include: means for receiving, from the second apparatus, a cell configuration including an identification of the measurement object, the measurement object including a frequency resource of a second value; means for determining frequency information of the activated synchronization signal; and means for determining the measurement result by measuring the activated synchronization signal based on the measurement object and the frequency information.

In some example embodiments, the second value may be predefined or preconfigured or reserved.

In some example embodiments, the first apparatus may further include: means for receiving, from the second apparatus, an indication indicating that the first type of synchronization signal is to be measured for the cell.

In some example embodiments, the first apparatus may further include: means for transmitting, to the second apparatus, capability information indicating support of measuring the first type of synchronization signal and the second type of synchronization signal; and means for determining the measurement result based on a determination whether a synchronization signal of the first type is activated.

In some example embodiments, if the first type of synchronization signal is activated, the measurement result may be determined based on the first type of synchronization signal. If the synchronization signal of the first type is not activated, the measurement result may be determined based on the second type of synchronization signal.

In some example embodiments, the first apparatus may further include: means for receiving, from the second apparatus, an indication indicating that the first type of synchronization signal is to be combined with the second type of synchronization signal in the determination of the measurement result for the cell; and means for determining the measurement result for the cell by combining measurements performed on the first type of synchronization signal and the second type of synchronization signal.

In some example embodiments, if the first type of synchronization signal is activated, the measurement result may be determined based on both the first type of synchronization signal and the second type of synchronization signal. If the first type of synchronization signal is not activated, the measurement result may be determined based on the second type of synchronization signal.

In some example embodiments, the first type of synchronization signal may include an on-demand synchronization signal block, and the second type of synchronization signal may include an always-on synchronization signal block.

In some example embodiments, the first apparatus may include a terminal device, and the second apparatus may include a network device.

In some example embodiments, a second apparatus capable of performing any of the method 900 (for example, the second apparatus 120 in FIG. 1) may include means for performing the respective operations of the method 900. The means may be implemented in any suitable form. For example, the means may be implemented in a circuitry or software module. The second apparatus may be implemented as or included in the second apparatus 120 in FIG. 1.

In some example embodiments, the second apparatus may include means for transmitting, to a first apparatus, a configuration of at least one measurement object for a plurality of on-demand synchronization signals for a cell; means for receiving, from a first apparatus, a measurement result for the cell. The measurement result is determined by measuring one or more synchronization signals at least based on a measurement object. The measurement object is determined for the activated on-demand synchronization signal from the received configuration for the cell.

In some example embodiments, the second apparatus may further include: means for transmitting, to the first apparatus, a cell configuration including an index of a measurement object of a first value.

In some example embodiments, the first value may be predefined or preconfigured or reserved.

In some example embodiments, each synchronization signal may be associated with one measurement object. Alternatively, a plurality of synchronization signals configured with the same frequency resource may be associated with one measurement object.

In some example embodiments, the second apparatus may further include: means for transmitting, to the first apparatus, a cell configuration including an identification of the measurement object, the measurement object including a frequency resource of a second value.

In some example embodiments, the second value may be predefined or preconfigured or reserved.

In some example embodiments, the second apparatus may further include: means for transmitting, to the first apparatus, an indication indicating that the first type of synchronization signal is to be measured for the cell.

In some example embodiments, the second apparatus may further include: means for receiving, from the first apparatus, capability information indicating support of measuring the first type of synchronization signal and the second type of synchronization signal.

In some example embodiments, if the first type of synchronization signal is activated, the measurement result may be determined based on the first type of synchronization signal. If the synchronization signal of the first type is not activated, the measurement result may be determined based on the second type of synchronization signal.

In some example embodiments, the second apparatus may further include: means for transmitting, to the first apparatus, an indication indicating that the first type of synchronization signal is to be combined with the second type of synchronization signal in the determination of the measurement result for the cell.

In some example embodiments, if the first type of synchronization signal of the first type is activated, the measurement result may be determined based on both the first type of synchronization signal and the second type of synchronization signal. If the first type of synchronization signal of the first type is not activated, the measurement result may be determined based on the second type of synchronization signal.

In some example embodiments, the first type of synchronization signal may include an on-demand synchronization signal block, and the second type of synchronization signal may include an always-on synchronization signal block.

In some example embodiments, the first apparatus may include a terminal device, and the second apparatus may include a network device.

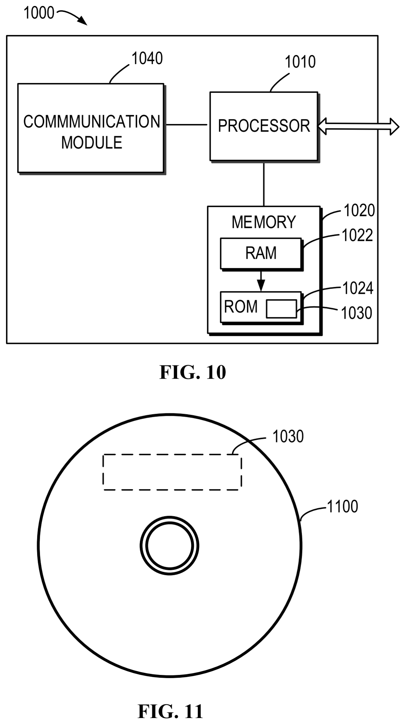

FIG. 10 is a simplified block diagram of a device 1000 that is suitable for implementing example embodiments of the present disclosure. The device 1000 may be provided to implement a communication device, for example, the first apparatus 110 or the second apparatus 120 as shown in FIG. 1. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1022 and other volatile memories that will not last in the power-down duration.

A computer program 1030 includes computer executable instructions that are executed by the associated processor 1010. The instructions of the program 1030 may include instructions for performing operations/acts of some example embodiments of the present disclosure. The program 1030 may be stored in the memory, e.g., the ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to FIG. 4 to FIG. 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 11 shows an example of the computer readable medium 1100 which may be in form of CD, DVD or other optical storage disk. The computer readable medium 1100 has the program 1030 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
at least one processor; and
at least one memory storing instructions that, when executed by the at least one processor, cause the terminal device at least to:
receive, from a network device, a configuration of at least one measurement object for a plurality of on-demand synchronization signals for a cell;
in accordance with a determination that an on-demand synchronization signal is activated for the cell, determine a measurement object for the activated synchronization signal from the received configuration for the cell;
determine a measurement result for the cell by measuring one or more synchronization signals at least based on the determined measurement object; and
transmit the measurement result to the network device.

2. The terminal device of claim 1, wherein the terminal device is caused to:
receive, from the network device, a cell configuration comprising an index of a measurement object of a first value; and
determine, from the at least one measurement object for the cell, the measurement object corresponding to the activated synchronization signal; and
determine the measurement result for the cell by measuring the activated synchronization signal based on the determined measurement object.

3. The terminal device of claim 2, wherein the first value is predefined or preconfigured or reserved.

4. The terminal device of claim 2 or 3, wherein each synchronization signal is associated with one measurement object, or
wherein a plurality of synchronization signals configured with the same frequency resource are associated with one measurement object.

5. The terminal device of claim 1, wherein at least one measurement object comprises a single measurement object for a plurality of synchronization signals, and wherein the terminal device is caused to:
receive, from the network device, a cell configuration comprising an index of the measurement object, the measurement object comprising a frequency resource of a second value;
determine frequency information of the activated synchronization signal; and
determine the measurement result by measuring the activated synchronization signal based on the measurement object and the frequency information.

6. The terminal device of claim 5, wherein the second value is predefined or preconfigured or reserved.

7. The terminal device of any of claims 1 to 6, wherein the one or more synchronization signals comprise a first type of synchronization signal and a second type of synchronization signal different from the first type of the synchronization signal, and wherein the terminal device is caused to:
receive, from the network device, an indication indicating that the first type of synchronization signal is to be measured for the cell.

8. The terminal device of claim 7, wherein the terminal device is caused to:
transmit, to the network device, capability information indicating support of measuring the first type of synchronization signal and the second type of synchronization signal; and
determine the measurement result for the cell based on a determination whether a synchronization signal of the first type is activated.

9. The terminal device of claim 8, wherein if the first type of synchronization signal is activated, the measurement result for the cell is determined based on the first type of synchronization signal; and
if the synchronization signal of the first type is not activated, the measurement result for the cell is determined based on the second type of synchronization signal.

10. The terminal device of any of claims 1 to 6, wherein the one or more synchronization signals comprise a first type of synchronization signal and a second type of synchronization signal different from the first type of the synchronization signal, and wherein the terminal device is caused to:
receive, from the network device, an indication indicating that the first type of synchronization signal is to be combined with the second type of synchronization signal in the determination of the measurement result for the cell; and
determine the measurement result for the cell by combining measurements performed on the first type of synchronization signal and the second type of synchronization signal.

11. The terminal device of claim 10, wherein if the first type of synchronization signal is activated, the measurement result for the cell is determined based on both the first type of synchronization signal and the second type of synchronization signal; and
if the first type of synchronization signal is not activated, the measurement result is determined based on the second type of synchronization signal.

12. The terminal device of any of claims 7 to 10, wherein the first type of synchronization signal comprises an on-demand synchronization signal block, and the second type of synchronization signal comprises an always-on synchronization signal block.

13. The terminal device of any of claims 1 to 12, wherein a measurement delay is determined based on which type of synchronization signal used by the terminal device to determine the measurement result for the cell.

14. A network device comprising:
at least one processor; and
at least one memory storing instructions that, when executed by the at least one processor, cause the network device at least to:
transmit, to a terminal device, a configuration of at least one measurement object for a plurality of on-demand synchronization signals for a cell;
receive, from a terminal device, a measurement result for the cell,
wherein the measurement result is determined by measuring one or more synchronization signals comprising an activated on-demand synchronization signal at least based on a measurement object, and
wherein the measurement object is determined for the activated synchronization signal from the received configuration for the cell based on the activated on-demand synchronization signal.

15. A method comprising:
receiving, by a terminal device from a network device, a configuration of at least one measurement object for a plurality of on-demand synchronization signals for a cell;
in accordance with a determination that an on-demand synchronization signal is activated for the cell, the terminal device determining a measurement object for the activated synchronization signal from the received configuration for the cell;
determining, by the terminal device, a measurement result for the cell by measuring one or more synchronization signals at least based on the determined measurement object; and
transmitting, by the terminal device, the measurement result to the network device.
